Europäisches Patentamt

European Patent Office

Office européen des brevets

(11) Publication number: **0 400 570**
**A2**

# EUROPEAN PATENT APPLICATION

(21) Application number: **90110146.9**

(22) Date of filing: **29.05.90**

(51) Int. Cl.5: **G11B 7/085, G11B 7/08**

(30) Priority: **30.05.89 JP 136604/89**
**30.05.89 JP 136605/89**

(43) Date of publication of application:
**05.12.90 Bulletin 90/49**

(84) Designated Contracting States:
**DE FR GB NL**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Takahashi, Naomasa, c/o Intellectual**
**Property Div.**
**K. K. Toshiba, 1-1 Shibaura 1-chome**
**Minato-ku, Tokyo(JP)**

(74) Representative: **Henkel, Feiler, Hänzel &**
**Partner**
**Möhlstrasse 37**
**D-8000 München 80(DE)**

(54) **Optical information processing system.**

(57) In an optical information processing system, an objective lens (15) for converging a light beam onto an optical disk (2) is suspended by plate springs (16) and moved along its optical axis by an drive unit 30. The springs (16) is fixed to a first structure (40) which is pivotally supported on a base (8) and is swung along the optical disk (2). A laser diode (35) and a collimator lens system (36) for guiding the light beam to the objective lens (15) are held in a second structure (50) which is pivotally supported in the first structure (40) and swung by a drive unit (11). The optical disk is roughly accessed with the light beam by using the first swing of the first structure (40) and finely accessed with the light beam by using the second swing of the second structure (50).

F I G. 5

# Optical information processing system

The present invention relates to an optical information processing system such as the optical disk apparatus, for example, and, more particularly, it relates to an improvement of the optical information processing system provided with an optical head in which an optical system is housed and serving to retrieve information from an information recording medium.

The optical disk apparatus has been recently provided with a system for swinging the optical head, in which the optical system for converging light beam on the information recording medium or optical disk is housed, parallel to the information recording medium to gain access to a target track on the medium.

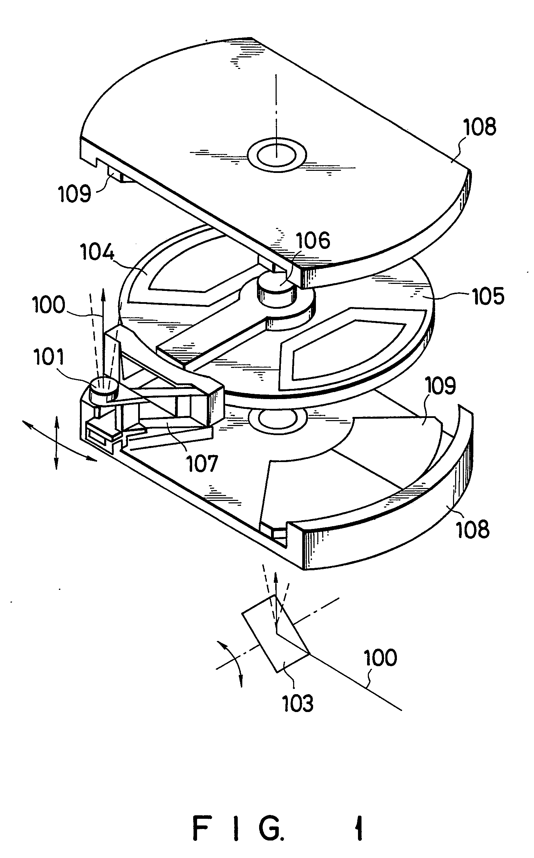

The system shown in Fig. 1 and read on "Electronics" (edition of April 18, 1988) is well known as the conventional access system of this type. In the case of this system, a part of the optical system including an objective lens 101 and a galvano-mirror 103 is mounted on a swing arm 105 which is provided with a drive coil for track access, and most of the other optical system components are located on fixed section. When power is applied to the drive coil, the swing arm 105 is swung round a shaft 106 to gain rough track access to the optical disk. When the galvano-mirror 103 is rotated, fine track access is gained to the optical disk while to trace a target trace on the disk by light beam. In Fig. 1, numeral 107 represents a focusing drive system, 108 yokes and 109 permanent magnets.

In the case of the conventional system shown in Fig. 1, the optical system components are arranged on both of the swing arm 105 which is a movable member and the fixed section. The optical path of the optical system is thus divided into two at some point of the path or particularly between the fixed and the movable section. It is therefore difficult to align the divided optical paths of the optical system components. In addition, one of the divided optical paths is shifted from the other by thermal stress or stress caused by external force. Access and tracking accuracies are thus lowered causing information not to be processed as desired.

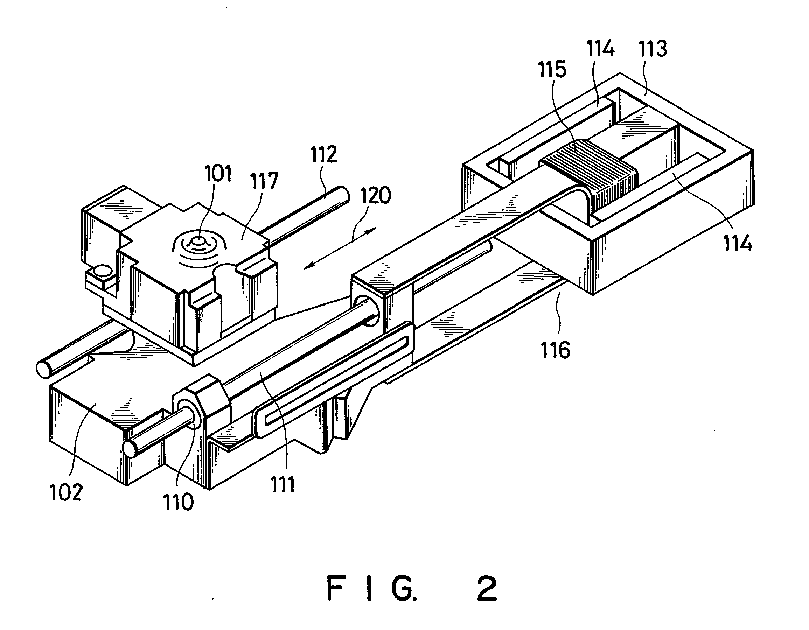

A two-demensional linear actuator shown in Fig. 2 is conventionally known in addition to the linear actuator of the swing arm type shown in Fig.1. In the case of the optical disk apparatus provided with the actuator shown in Fig. 2, an optical head 102 on which the optical system including the objective lens 101 is mounted is freely slidably guided by a pair of guide shafts 111 and 112 through a bush 110 and the optical head 102 is moved in directions shown by arrows 120 in Fig. 2 through a linear motor 116 which comprises a yoke 113, magnets 114 and a drive coil 115.

In the case of the linear actuator shown in Fig. 2, however, the optical head 102 cannot be finely moved because of friction caused between the bush 110 and the guide shaft 111. In order to solve this, the access system is designed to have double stages in such a way that the objective lens 101 is finely moved by a two-dimensional lens actuator 117 which is also used for focusing operation, and roughly moved by the linear motor 116.

The actuator shown in Fig. 2 uses the two-dimensional actuator 116. This causes the objective lens 101 to be vibrated, just after the rough track access operation, not to shorten the time needed to complete the whole access operation. In addition, cross talk is caused between magnetic fields for focus and track controls. Further, all of the optical system components are mounted on the optical head. Therefore, the linear motor 116 must have large drive force and the linear force of the optical head 102 becomes large. When the optical head 102 is moved at high speed, therefore, its stopping accuracy is lowered.

An object of the present invention is to provide an optical information processing system simpler in structure but capable of preventing access and tracking accuracies from being lowered because the optical path is not divided into two or more and also capable of processing information as desired.

Another object of the present invention is to provide an optical information processing system simpler in structure but capable of preventing the objective lens from being vibrated just after the rough access operation and cross talk from being caused between the focus and track control magnetic fields and also capable of making the movable section smaller in size and carrying out a more stable information process at a higher speed.

According to the present invention, there is provided a system for retrieving information from an information recording medium comprising guiding means for guiding a light beam; converging means, having an optical axis, for converging the guided light beam to form a beam spot on the information recording medium; holding means for holding the converging means movable along the optical axis; swinging means for swinging the guiding means to move the beam spot on the information recording medium; and transferring means for transferring the converging means and the holding means along the information recording medium.

According to the present invention, there is also provided a system for retrieving information from an information recording medium comprising guiding means for guiding a light beam; converging means, having an optical axis, for converging the guided light beam to form a beam spot on the information recording medium: holding means for holding the converging means movable along the optical axis; swinging means for swinging the guiding means to move the beam spot on the information recording medium, the swinging means being being received in the holding means; and transferring means for transferring the converging means and the holding means along the information recording medium.

According to the present invention, there is furthere provided a system for retrieving information from an information recording medium comprising guiding means for guiding a light beam; converging means, having an optical axis, for converging the guided light beam to form a beam spot on the information recording medium; holding means for holding the converging means movable along the optical axis; swinging means for swinging the guiding means to move the beam spot on the information recording medium, the swinging means being separately arranged in the holding means; and transferring means for transferring the converging means and the holding means along the information recording medium.

This invention can be more fully understood from the following detailed description when taken in conjunction with the accompanying drawings, in which:

Fig. 1 is a perspective view showing the conventional optical disk apparatus dismantled, said apparatus being provided with the linear actuator of the swing arm type;

Fig. 2 is a perspective view showing the conventional optical disk apparatus provided with the linear actuator of the two-dimensional type;

Fig. 3 is a perspective view showing an example of the optical disk apparatus according to the present invention;

Fig. 4 shows the optical disk apparatus in Fig. 3 horizontally sectioned;

Fig. 5 shows the optical disk apparatus in Fig. 3 vertically sectioned;

Fig. 6 is a perspective view showing an arrangement of the fine access mechanism shown in Figs. 3, 4 and 5;

Figs. 7A, 7B and 7C are intended to explain how the optical system is changed by the fine access mechanism;

Fig. 8 is a perspective view showing another example of the optical disk apparatus according to the present invention;

Fig. 9 shows an optical head and a rough access mechanism of the optical disk apparatus in Fig. 8 vertically sectioned; and

Fig. 10 shows a fine access mechanism and an optical system of the optical disk apparatus in Fig. 8 partially and vertically sectioned.

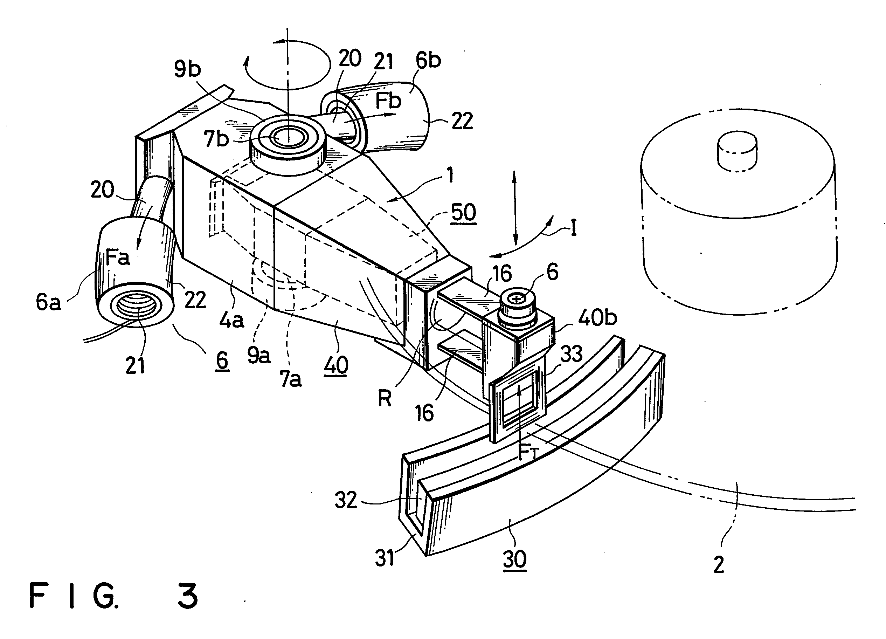

As shown in Figs. 3 through 5, an optical head 1 houses an optical system 3 for focusing optical beam R onto an optical disk 2, which serves as a information recording medium, to process information. This optical head 1 is of the double structure comprising a first head structure 40 swung to carry out rough access, and a second head member 50 housed in the first head structure 40 and swung to carry out fine access.

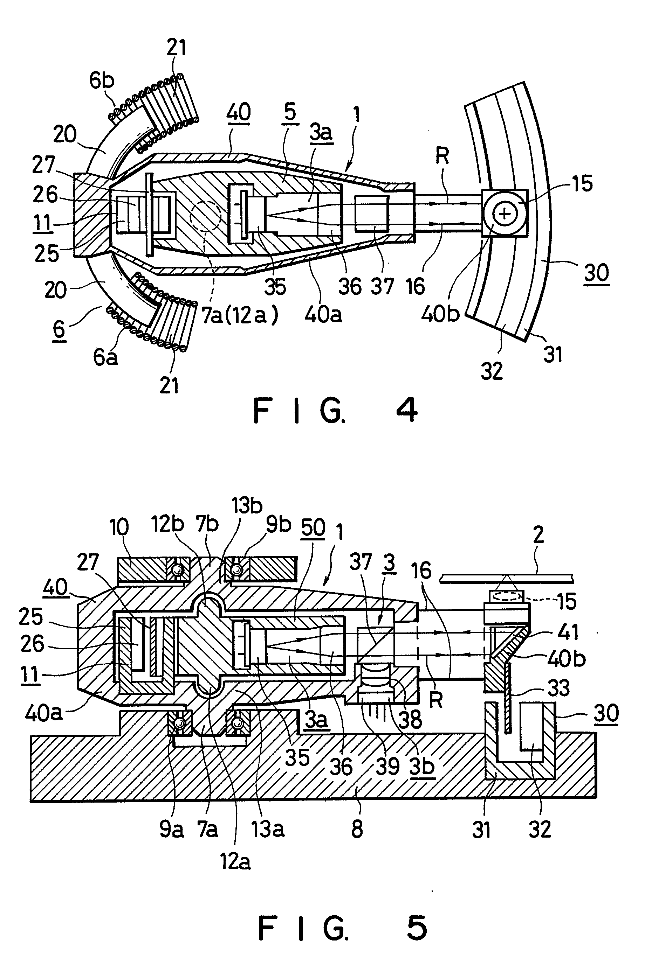

The first head structure 40 is swung round shafts 7a and 7b and parallel to the optical disk 2 by a drive means 6 which is used for rough access, as shown in Figs. 3 and 5. The shafts 7a and 7b are supported by a first anti-friction bearing 9a attached to a base 8 and by a second anti-friction bearing 9b held by a support member 10.

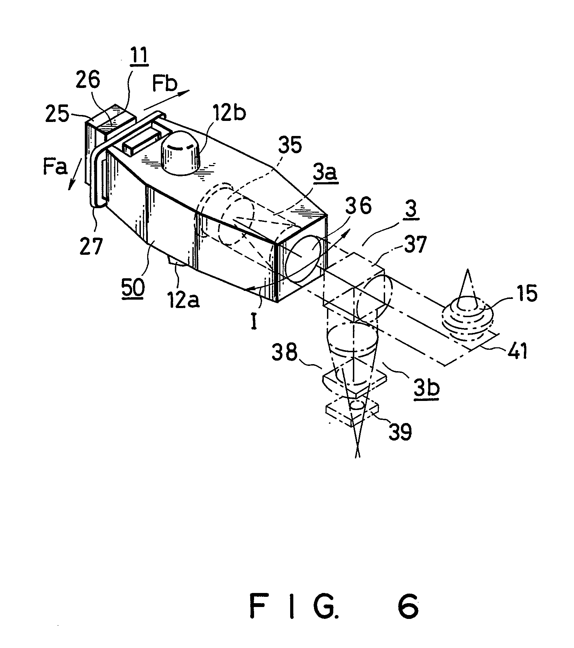

As shown in Figs. 5 and 6, the second head structure 50 is finely moved round shafts 12a and 12b, which are arranged coaxially to the shafts 7a and 7b of the first head structure 40, by a drive means 11 which is used for fine access. The shafts 12a and 12b are supported by first and second slide bearings 13a and 13b and kept swingable by fluid lubrioating agent filled between the shafts 12a, 12b and the bearings 13a and 13b.

When the first head structure 40 is swung, an objective lens 15 located on the top of one end of the optical head 1 is moved in the radial or track access direction of the optical disk 2 and when the second head structure 50 is swung, the focusing position of laser beam R is changed by the objective lens 15.

The first head structure 40 includes a first case section 40a for housing the second head structure 50 therein and a second case section 40b connected to the front end of the first case section 40 through a pair of parallel focusing plate springs 16, as well as the shafts 7a and 7b.

As shown in Figs. 3 and 5, the drive means 6 which is used for rough access includes an arc rod magnet 20 attached to the rear end of the first case section 40a of the first head structure 40, and first and second drive sections 6a and 6b, each of which has a coil 21 and holds one end portion of the rod magnet 20 to freely move therein. When one of these drive sections 6a and 6b is energized, it repels or draws the magnet 20 to thereby swing the first case section 40° round the shafts 7a and 7b by a certain distance. In the case of the 5-inch optical disk 2, for example, the first case section 40a can be swung round the shafts 7a and 7b by 20° in one direction, that is, by 40° in both directions and in the case of the 10-inch optical disk 2, it can be swung by 50° in one direction.

The drive means 11 which is used for fine track access includes a yoke 25 attached to the first case section 40a, a magnet 26 attached to the yoke 25, and a coil 27 attached to the second head structure 50.

A focusing drive means 30 is arranged relative to the second case section 40b. This drive means 30 includes a yoke 31 attached to the base 8, a magnet attached to the yoke 31, and a focusing servo drive coil 33 attached to the second case section 40b.

As shown in Figs. 4 and 5, the optical system 3 housed in the optical head 1 includes a laser diode 35 for shooting laser beam, a collimator lens 36 for collimating the laser beam shot from the laser diode 35, a half mirror 37 for directing the collimated laser beam to the objective lens 15 through a reflector 41, a detecting lens system 38 for guiding the laser beam reflected by the optical disk 2, optical detector 39 for detecting the optical beam guided, and the objective lens 15.

A light sending system 3a comprising the laser diode 35 and the collimator lens 36 is incorporated into the second head structure 50 and a light receiving system 3b comprising the half mirror 37, the detecting lens system 38 and the optical detector 39 is incorporated into the first head structure 40.

When power is applied to the coil 21 of the drive section 6a or 6b of the drive means 6 which is used for rough track access, force Fa or Fb is created, as shown by an arrow in Figs. 3 and 6, and the first head structure 40 in which the second head structure 50 is housed is thus swung round the shafts 7a and 7b to swing the whole of the optical head 1 parallel to the optical disk 2 or in directions I shown by arrows in Figs. 3 and 6. Rough track access is thus achieved. When power is applied to the coil 27 of the drive means 11 which is used for fine track access, the second head structure 50 into which the light sending system 3a comprising the laser diode 35 and the collimator lens 36 is incorporated is finely moved round the shafts 12a and 12b parallel to the optical disk 2 and fine track access is thus achieved.

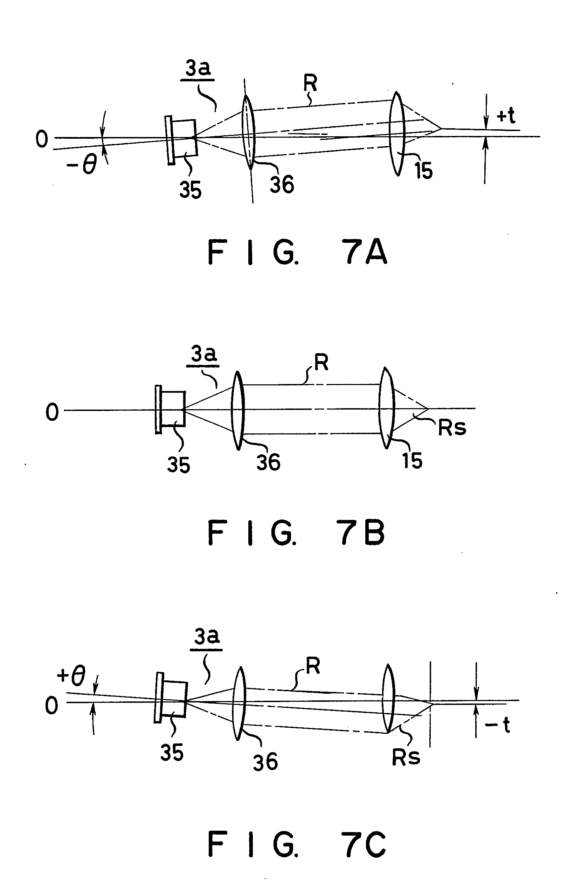

Figs. 7A, 7B and 7C show how the optical path of the optical system 3 changes while the system 3 is carrying out fine track access and tracking operation. Fig. 7A shows the optical path of the system 3 when tits light sending system 3a including the optical axes of the laser diode 35 and collimator 36 is swung from the neutral position shown in Fig. 7B in a minus direction only by an angle of 0. Fig. 7C shows the optical path of the optical system3 when its light sending system 3a is swung from the neutral position in a plus direction only by the angle of 0. As apparent from Figs. 7A, 7B and 7C, the position of optical beam which is focused on the optical disk 2 by the objective lens 15 is shifted in the plus direction only by (t) when the light sending system 3a is swung in the minus direction only by 0 and the position of optical beam focused on the optical disk 2 is shifted in the minus direction only by (t) when the light sending system 3a is swung in the plus direction only by 0.

When tracking control current detected by the optical system 3 is applied to one of the coils 21 of the drive means 6 which is used for rough track access and to the coil 27 of the drive means 11 which is used for fine track access, therefore, the first and second head structures 40 and 50 of the optical head 1 are swung to form a spot of the laser beam R on a desired track of the optical disk 2 through the objective lens 15.

The shaft 12a and 12b of the second head structure 50 in which the light sending system 3a for fine track access are supported by the slide bearings 13a and 13b and fluid lubricating agent is present in the clearance between the shafts 12a, 12b and the slide bearings 13a, 13b. Therefore, the shafts 12a and 12b can be held not contacted with the bearings 13a and 13b so that the first and second head structures 40 and 50 can be moved smoothly and finely in the course of the track access operation. In addition, vibration which is added to the structures 40 and 50 can be reduced. This enables more stable fine access and tracking operation to be achieved.

When current is applied to the coil 33 of the focusing servo drive means 30, force acts on the second case section 40b of the first head structure 40 to move parallel to the optical disk 2 or in a direction II shown by an arrow in Fig. 3 against the plate springs 16. When focus control current detected by the light receiving system 3b of the optical system 3 is applied to the coil 33, a smallest spot of the laser beam R can be formed on the optical disk 2 while keeping the laser beam R focused on the disk 2 through the objective lens 15.

The optical head 1 in which the optical system 3 is housed comprises the first head structure 40 freely swingable in the access direction, and the second head structure 50 swingably incorporated into the first head structure 40. When the first head structure 40 is moved, therefore, the second head structure 50 is moved together with the structure 40 to thereby enable rough track access to be attained. When only the light sending system 3a of the optical system 3 is incorporated into the second head structure 50 and this structure 50 is swung, the position of the laser beam R focused on the optical disk 2 is changed to enable fine track access and tracking operation to be attained. As compared with the conventional case where the whole of the optical system is housed in the optical head and the optical system is divided into movable and fixed sections, the present invention can prevent the optical axes in the optical system 3 from being shifted from the other to thereby achieve a more stable track access. This enables a better information process to be attained. Further, only the light sending system 3a of the optical system 3 is housed in the second head structure 50. Their assembly can be thus made easier, the second head structure 50 can be made lighter and more compact, and the influence of inertial force can be reduced to a greater extent. This enables track access to be achieved with a higher accuracy.

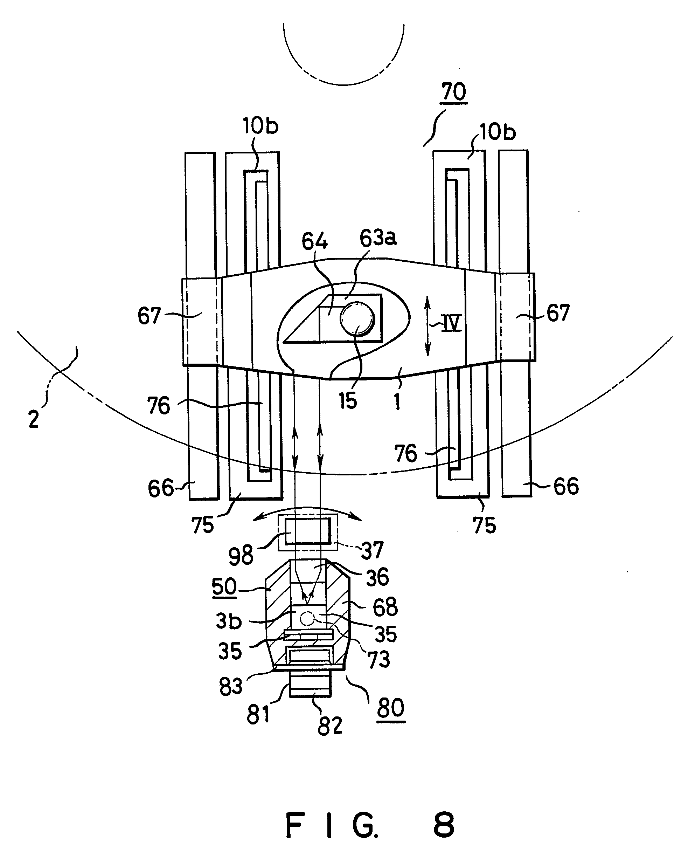

Another example of the optical disk apparatus according to the present invention will be described with reference to Figs. 8 through 10.

As shown in Figs. 8 and 9, a first structure 60 of the optical head 1 houses a focusing optical system 63a such as a prism 64 and the objective lens 15 of the optical system 3 which converges light beam onto the optical disk 2 which serves as the information recording medium. The both ends of the optical head 1 are fixed to sliders 67 of the first structure 60, which are freely slidably supported by slide rails 66 suspended parallel to each other, to smoothly move in the radial direction of the optical disk 2. Arranged on one side of the optical head 1 and in the direction in which the optical head 1 moves is a light sending unit 60 which is provided with the light sending system 3b for introducing the laser beam R to the prism 64 and which can be swung independently of the focusing optical system 63a.

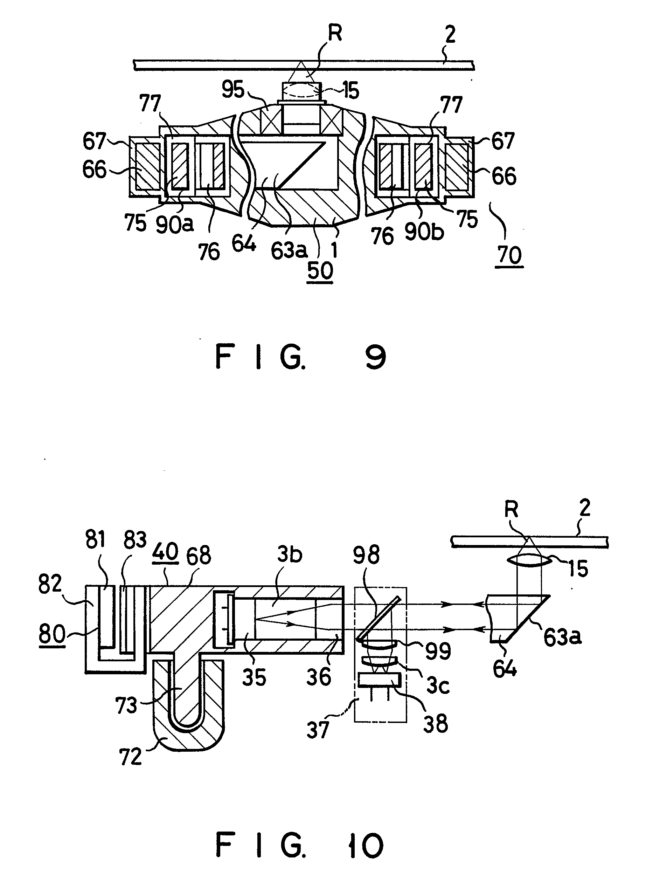

The optical head 1 is linearly moved by a first drive mechanism 70 which is used for rough track access, and the light sending unit 68 is finely swung round a shaft 73 by a second drive mechanism 80 which is used for fine track access. The shaft 73 is supported by a slider bearing 72 and fluid lubricating agent is interposed between the shaft 73 and the slider bearing 72, as shown in Fig. 10.

As shown in Figs. 8 and 9, the drive mechanism 70 for rough track access comprises first and second drive sections 90a and 90b including yokes 75 fixedly arranged along the slide rails 66, magnets 76 attached to the yokes 75, and coils 77 attached to the optical head 1. When power is applied to the coils 77 of the drive sections 90a and 90b, the optical head 1 is linearly moved by a predetermined distance.

The drive mechanism 80 for fine track access includes a yoke 82, a magnet 81 attached to the yoke 82, and a coil 83 attached to the light sending unit 68, as shown in Figs. 8 and 10.

As shown in Fig. 9, a primary lens actuator 95 is incorporated into the optical head 1 and it serves as the focusing drive mechanism for moving the objective lens 15 to and from the underside of the optical head 1.

The optical system 3 includes the laser diode 35, the collimator 36, a half mirror 98, a detecting lens system 99, the light detector 38, the prism 64 and the objective 15.

The light sending means 3b including the laser diode 35 and the collimator lens 36 is incorporated into the light sending unit 68 and the light receiving system including the half mirror, a detecting lens system 3c and the light detector is incorporated into the light receiving unit 37 which is fixedly arranged between the light sending unit 68 and the optical head 1. The focusing optical system 3a including the prism 64, the objective lens 15 and the like is incorporated into the optical, head 1, as described above.

When power is applied to the coils 77 of the drive sections 90a and 90b of the drive system 90 for rough track access, the optical head 1 is moved parallel to the optical disk 2 or linearly in those directions shown by arrows III in Fig. 8 to conduct rough track access. When power is applied to the coil 82 of the drive system 80 for fine track access, the light sending unit 68 into which the light sending optical system 3b including the laser diode 35 and the collimator lens 36 is finely swung, parallel to the optical disk 2, round the shaft 73 to carry out fine track access.

When the optical head shown in Figs. 8, 9 and 10 is swung in the minus direction only by the angle of 0 as shown in Figs. 7A, 7B and 7C, the position of the light beam focused on the optical disk 2 through the objective lens 15 is shifted in the plus direction only by (t) and when it is swung in the plus direction only by 0, the position of the light beam is shifted in the minus direction only by (t).

When tracking control current detected by the optical system 3 is applied to the coils 77 of the drive mechanism 70 for rough track access and to the coil 82 of the drive mechanism 80 for fine track access, therefore, the optical head 1 is moved near a target, track on the disk 2 and the light sending unit 68 is then finely swung so that the spot of the laser beam R shot through the objective lens 15 can be directed to the target track.

The shaft 73 of the light sending unit 68 in which the light sending system 3b for fine track access is housed is supported by the slider bearing 72 and fluid lubricating agent is interposed between the shaft 73 and the slider bearing 72 to keep the shaft 73 not contacted with the slider bearing 72 in the course of the track access operation. The optical head 1 can be thus smoothly and finely moved and vibration which is added to the head can be reduced. This enables a more stable fine access and tracking operation to be attained.

Further, it is arranged that the laser beam R is reflected two times by the light path changing prism 64. Even when the optical head 1 is moved in any non-access direction and the prism 64 and the objective lens 15 are tilted accordingly, therefore, those influences which are caused by the tilting of the prism 64 and the objective lens 15 can be canceled each other by the two-time reflections of the laser beam R. This prevents any optically undesired influence from being caused by the tilting of the optical axis.

Further, when the light sending unit 68 provided with the light sending means 3b such as the laser diode 35 and the collimator 36 which sends light to the focusing optical system 3a like the objective lens 15 is finely swung to shift the optical axis, the spot of the laser beam R focused on the optical disk 2 can be changed to carry out fine track access. In addition, the fine track access system can be separated from the rough track access system and attached to the fixing side. The objective lens 15 can be thus prevented from vibrating just after the rough track access operation, as seen in the case where the conventional two-dimensional lens actuator is used, and this enables the time needed to carry out track access to be made shorter. Further, the occurrence of cross talk between the magnetic fields for focus and track control can be prevented. Still further, the optical head 1 which is a movable component can be made smaller in size. This enables the optical head 1 not to need any large driving force but to be moved at a higher speed.

According to the present invention as described above, there can be provided an optical information processing system simpler in structure but capable of preventing access and tracking accuracy from being lowered by the shifting of the optical axis to thereby achieve a better information process.

According to the present invention, there can be provided an optical information processing system simpler in structure but capable of preventing the vibration of the objective lens just after the rough track access operation and the occurrence of cross talk and also capable of making the movable component smaller in size and attaining a more stable information process at a higher speed.

## Claims

1. A system for retrieving information from an information recording medium (2) comprising:
guiding means (35, 36) for guiding a light beam (R);
converging means (15), having an optical axis, for converging the guided light beam (R) to form a beam spot on the information recording medium (2);
holding means (40, 60) for holding the converging means (15) movable along the optical axis; and
transferring means (6, 70) for transferring said said holding means (40, 60) along the information recording medium (15);
characterized by further comprising:
swinging means (11, 50) for swinging said guiding means (35, 36) to move the beam spot on the information recording medium.

2. The system according to claim 1, characterized by further comprising:
moving means (30, 95) for moving said converging means (15) along the optical axis.

3. The system according to claim 1, characterized in that said holding means (40, 60) includes a first structure (40, 60) for holding said converging means (15), said first structure (40, 60) being transferred by said transferring means (6, 70).

4. The system according to claim 1, characterized in that said swinging means (11, 50) includes a second structure (50) for holding said guiding means (35, 36), said second structure (50) being swung by said swinging means (11, 50).

5. The system according to claim 1, characterized in that said holding means (40,60) includes a first structure (40,60) for holding said converging means (15), and said swinging means (11, 50) includes a second structure (50) for holding said guiding means (35, 36).

6. The system according to claim 5, characterized in that said swinging means (11,50) includes a permanent magnet (26) and coils (27) which apply magnetic field to the permanent magnet (26) to swing said second structure (50), and one of the magnet (26) and the coils (27) is fixed to the second structure (50).

7. The system according to claim 5, characterized in that said transferring means (6, 70) includes a permanent magnet (20) and coils (21) which apply magnetic field to the permanent magnet to move (20) said first structure (40), and one of the magnet (20) and the coils (21) is fixed to the first structure (40).

8. The system according to claim 1, characterized in that said holding means (40, 60) includes means (16, 95) for suspending the converging means (15) movable along the optical axis.

9. The system according to claim 8, characterized by further comprising:
moving means (30, 95) for moving the converging means along the optical axis.

10. A system for retrieving information from an information recording medium (2) comprising:
guiding means (35, 36) for guiding a light beam (R);
converging means (15), having an optical axis, for converging the guided light beam (R) to form a beam spot on the information recording medium (2);

holding means (40) for holding the converging means (15) movable along the optical axis; and transferring means (6) for transferring said converging means (15) and said holding means (40, 60) along the information recording medium:

characterized by further comprising

swinging means (50) for swinging said guiding means (35, 36) to move the beam spot on the information recording medium (2), said swinging means (50) being being received in said holding means(40).

11. The system according to claim 10, characterized by further comprising:

moving means (30, 95) for moving said converging means (15) along the optical axis.

12. The system according to claim 10, characterized in that said holding means (40) includes a first structure (40) for holding said converging means (15), said first structure (40) being transferred by said transferring means (6).

13. The system according to claim 10, characterized in that said swinging means (11, 50) includes a second structure (50) for holding said guiding means (35, 36), said second structure (50) being swung by said swinging means (11, 50).

14. The system according to claim 10, characterized in that said holding means (40) includes a first structure (40, 60) for holding said converging means (15), and said swinging means (11, 50) includes a second structure (50) for holding said guiding means (35, 36).

15. The system according to claim 14, characterized in that said swinging means (11, 50) includes a permanent magnet (26) and coils (27) which apply magnetic field to the permanent magnet (26) to swing said second structure (50), and one of the magnet (26) and the coils (27) is fixed to the second structure (50).

16. The system according to claim 14, characterized in that said transferring means (6) includes a permanent magnet (20) and coils (21) which apply magnetic field to the permanent magnet to move (20) said first structure (40), and one of the magnet (20) and the coils (21) is fixed to the first structure (40).

17. The system according to claim 10, characterized in that said transferring means (6) includes means for pivotally supporting the second structure (40).

18. The system according to claim 10, characterized in that said holding means (40) includes means (16) for suspending the converging means (15) movable along the optical axis.

19. The system according to claim 10, characterized by further comprising:

moving means (30) for moving the converging means (15) along the optical axis.

20. A system for retrieving information from an information recording medium (2) comprising:

guiding means (35, 36) for guiding a light beam (R);

converging means (15), having an optical axis, for converging the guided light beam (R) to form a beam spot on the information recording medium (2);

holding means (40) for holding the converging means (15) movable along the optical axis; and transferring means (70) for transferring said converging means (15) and said holding means (60) along the information recording medium:

characterized by further comprising

swinging means (50) for swinging said guiding means (35, 36) to move the beam spot on the information recording medium (2), said swinging means (50) being separately arranged in said holding means (60).

21. The system according to claim 20, characterized by further comprising:

moving means (95) for moving said converging means (15) along the optical axis.

22. The system according to claim 20, characterized in that said holding means (60) includes a first structure (60) for holding said converging means (15), said first structure (60) being transferred by said transferring means (70).

23. The system according to claim 20, characterized in that said swinging means (11, 50) includes a second structure (50) for holding said guiding means (35, 36), said second structure (50) being swung by said swinging means (11, 50).

24. The system according to claim 20, characterized in that said holding means (60) includes a first structure (60) for holding said converging means (15), and said swinging means (11, 50) includes a second structure (50) for holding said guiding means (35, 36).

25. The system according to claim 24, characterized in that said swinging means (11,50) includes a permanent magnet (26) and coils (27) which apply magnetic field to the permanent magnet (26) to swing said second structure (50), and one of the magnet (26) and the coils (27) is fixed to the second structure (50).

26. The system according to claim 24, characterized in that said transferring means (6, 70) includes a permanent magnet (20) and coils (21) which apply magnetic field to the permanent magnet to move (20) said first structure (60), and one of the magnet (20) and the coils (21) is fixed to the first structure (60).

27. The system according to claim 20, characterized in that said transferring means (70) includes means for linearly guiding the second struc-

ture (60).

28. The system according to claim 20, characterized in that said holding means (60) includes means (95) for suspending the converging means (15) movable along the optical axis.

29. The system according to claim 20, characterized by further comprising:
moving means (95) for moving the converging means (15) along the optical axis.

F I G. 1

F I G. 2

EP 0 400 570 A2

F I G.   3

F I G. 4

F I G. 5

F I G. 6

F I G. 7A

F I G. 7B

F I G. 7C

F I G. 8

F I G. 9

F I G. 10